# EUROPÄISCHE PATENTSCHRIFT

(11) **EP 1 359 450 B1**
(45) Veröffentlichungstag und Bekanntmachung des Hinweises auf die Patenterteilung: **03.08.2005**
(21) Anmeldenummer: 03009669.7
(22) Anmeldetag: 30.04.2003
(51) Int. Cl.: G02B 7/00, G06K 7/10

(54) **Optischer Sensor mit justierbarer Linsenfassung**
Optical sensor with adjustable lens mount
Capteur optique avec une monture de lentille reglable

(30) Priorität: 02.05.2002 DE 10219529
(43) Veröffentlichungstag der Anmeldung: 05.11.2003
(73) Patentinhaber: Leuze electronic GmbH + Co KG, 73277 Owen/Teck (DE)
(72) Erfinder: Claus, Armin, 72622 Nürtingen (DE); Dümmel, Thomas, 72584 Hülben (DE)
(74) Vertreter: Ruckh, Rainer Gerhard, Dr.

(56) Entgegenhaltungen:
- WO-A-93/06514
- DE-A- 19 844 238
- US-A- 5 659 432
- PATENT ABSTRACTS OF JAPAN vol. 2000, no. 01, 31. Januar 2000 (2000-01-31) & JP 11 282954 A (MATSUSHITA ELECTRIC IND CO LTD), 15. Oktober 1999 (1999-10-15)
- CHALL P: "FOCUSING SEMICONDUCTOR LASER DIODES IN BARCODE READERS" ELECTRONIC COMPONENTS AND APPLICATIONS, PHILIPS. EINDHOVEN, NL, Bd. 9, Nr. 2, 1989, Seiten 101-106, XP000073926
- HIROYUKI MIYAZAKI ET AL: "AUTOFOCUSSING TYPE BARCODE READER OBR-70-7AF WITH ADVANCED BEAM FORMING AND DECODING TECHNIQUES - OMNIDIRECTIONAL READING IN GREAT DEPTH OF FIELD -" NEC RESEARCH AND DEVELOPMENT, NIPPON ELECTRIC LTD. TOKYO, JP, Bd. 34, Nr. 2, 1. April 1993 (1993-04-01), Seiten 239-247, XP000322017 ISSN: 0547-051X

## Beschreibung

Die Erfindung betrifft einen optischen Sensor gemäß dem Oberbegriff des Anspruchs 1.

Derartige optische Sensoren können generell als Lichtschranken, Lichttaster, Distanzsensoren ausgebildet sein. Insbesondere können die optischen Sensoren auch als Barcodelesegeräte zur Erfassung von Barcodes oder allgemein von Kontrastmustern aufweisenden Marken gebildet sein.

Generell wird bei derartigen optischen Sensoren eine Sendeoptik oder allgemein ein Optiksystem zur Strahlformung der vom Sender emittierten Sendelichtstrahlen eingesetzt. Zur Erzielung der gewünschten Strahlformung der Sendelichtstrahlen, insbesondere zu deren Fokussierung und Strahlführung entlang einer bestimmten Strahlachse ist es notwendig, die Sendeoptik genau und reproduzierbar relativ auszurichten.

Während des Fertigungsprozesses des optischen Sensors werden der Sender und die Sendeoptik hierzu in typischerweise manuell durchgeführten Fertigungsschritten in einem Gehäuse, in welchem der optische Sensor integriert ist, eingebaut.

Ein derartiger optischer Sensor ist in der DE 198 44 238 A1 beschrieben. Der als Barcodelesegerät ausgebildete optische Sensor ist in einem Gehäuse integriert, wobei zur Aufnahme der optischen Komponenten ein in das Gehäuse einschiebbarer Gehäuseeinsatz vorgesehen ist.

Der Gehäuseeinsatz weist eine hohlzylindrische Aufnahme auf, in welcher der Sender und die Sendeoptik in Abstand hintereinander gelagert sind.

Nachteilig hierbei ist, dass die Einbaupositionen des Senders und der Sendeoptik fest vorgegeben sind, so dass keine Einstellung des Strahlverlaufes der Sendelichtstrahlen möglich ist. Da der Sender und die Sendeoptik zur Fixierung an der Aufnahme typischerweise festgeklebt werden müssen, sind insbesondere auch Korrekturen bei einer fehlerhaften Einbaulage der Komponenten, die insbesondere auch durch Verkanten der Komponenten in der Aufnahme auftreten, nachträglich nicht mehr möglich.

Aus der WO 93/06514A ist eine Vorrichtung zur Verstellung der Positionen einer Linse zur Strahlformung der Lichtstrahlen eines Laserdruckers bekannt. Die Vorrichtung umfasst einen auf einem Schlitten in z-Richtung verfahrbaren Träger, an welchem ein Halter in einer x-y-Ebene verstellbaren Linse montierbar ist.

Der Erfindung liegt die Aufgabe zugrunde, für einen optische Sensor der eingangs genannten Art eine möglichst flexible und zuverlässige Einstellmöglichkeit für die Strahlführung der von diesem emittierten Sendelichtstrahlen bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Mittels der erfindungsgemäßen Einstellvorrichtung kann auf einfache Weise die Strahlführung der Sendelichtstrahlen flexibel vorgegeben werden. Besonders vorteilhaft ist dabei, dass die Einstellung reversibel ist, d.h. dass diese bei Bedarf geändert werden kann.

Durch die Einstellung des Abstandes des Senders zur Sendeoptik kann das Strahlprofil der Sendelichtstrahlen sowie deren Fokuslage geändert werden. Durch eine Einstellung der Lage des Senders oder der Sendeoptik quer zur optischen Achse des Senders kann die Strahlrichtung der Sendelichtstrahlen präzise eingestellt werden.

Die Einstellvorrichtung umfasst einen Optikhalter, in welchem die Sendeoptik beweglich gelagert ist. Dabei ist die Sendeoptik in dem Optikhalter in einer senkrecht zur Strahlachse der Sendelichtstrahlen orientierten Ebene schwenkbar gelagert, wodurch die Strahlrichtung der Sendelichtstrahlen einstellbar ist.

Die Sendeoptik kann im Optikhalter in allen drei Raumrichtungen eingestellt werden. Dadurch kann der Sender ortsfest innerhalb des optischen Sensors angeordnet sein.

Die Vorgabe der Strahlrichtung durch eine Schwenkbewegung des Optikhalters quer zur optischen Achse des Senders. Die Einstellung des Strahlprofils und der Fokuslage wird durch Biegung des Optikhalters bezüglich eines vorgegebenen Bezugspunktes erzielt.

In jedem Fall ist der Optikhalter mittels mechanischer Fixier- bzw. Befestigungssysteme in einer bestimmten Einstellposition gehalten, wobei diese Einstellposition jederzeit durch Betätigen der Fixier- und Befestigungssysteme wieder gelöst werden kann.

Die Erfindung wird im Nachstehenden anhand der Zeichnungen erläutert. Es zeigen
- Fig. 1: Schematische Darstellung eines als Barcodelesegerät ausgebildeten optischen Sensors.
- Fig. 2: Perspektivische Darstellung der Einstellvorrichtung für den optischen Sensor gemäß Figur 1.
- Fig. 3: Querschnitt durch die Einstellvorrichtung gemäß Figur 2.
- Fig. 4: Perspektivische Darstellung des Optikhalters der Einstellvorrichtung gemäß den Figuren 2 und 3.

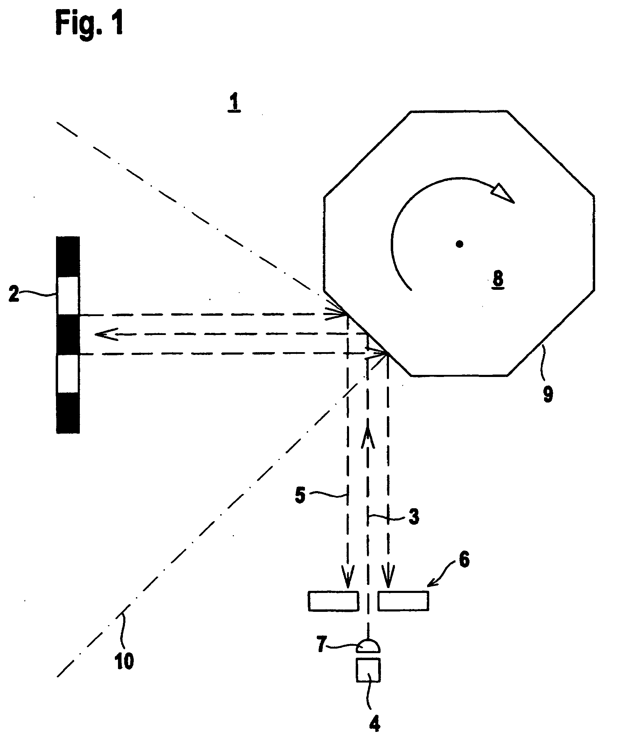

Figur 1 zeigt schematisch die wesentlichen Komponenten eines als Barcodelesegerät ausgebildeten optischen Sensors 1. Der optische Sensor 1 dient zur Erfassung von Barcodes 2 oder allgemein zur Erfassung von Kontrastmustern aufweisenden Marken. Prinzipiell kann der optische Sensor 1 auch als Lichtschranke, Lichttaster, Distanzsensor oder dergleichen ausgebildet sein.

Das Barcodelesegerät gemäß Figur 1 weist einen Sendelichtstrahlen 3 emittierenden Sender 4 und einen Empfangslichtstrahlen 5 empfangenden Empfänger 6 auf. Dem Sender 4, der vorzugsweise von einer Laserdiode gebildet ist, ist eine Sendeoptik 7 zur Strahlformung und Fokussierung der Sendelichtstrahlen 3 nachgeordnet.

Die vom Sender 4 emittierten Sendelichtstrahlen 3 und die von einem Barcode 2 zurückreflektierten Empfangslichtstrahlen 5 sind über eine Ablenkeinheit geführt. Die Ablenkeinheit besteht im vorliegenden Fall aus einem motorisch getriebenen Polygonspiegelrad 8 mit einer vorgegebenen Anzahl von facettenförmigen Spiegelflächen 9.

Durch die Drehbewegung des Polygonspiegelrades 8 werden die Sendelichtstrahlen 3 periodisch in einem Überwachungsbereich 10 geführt, der in einer Abtastebene verläuft. Der Überwachungsbereich 10 erstreckt sich über einen bestimmten Winkelbereich, der durch die Anzahl der Spiegelflächen 9 des Polygonspiegelrades 8 vorgegeben ist.

Die am Ausgang des Empfängers 6 anstehenden Empfangssignale werden in einem nicht dargestellten Verstärker verstärkt und in einer ebenfalls nicht dargestellten Auswerteeinheit ausgewertet.

Die Empfangslichtstrahlen 5, die an den Barcodes 2 reflektiert werden, weisen entsprechend der Folge von schwarzen und weißen Strichelementen des Barcodes 2 eine Amplitudenmodulation auf. Die am Ausgang des Empfängers 6 anstehenden Empfangssignale weisen eine entsprechende Amplitudenmodulation auf. Die analogen, amplitudenmodulierten Empfangssignale werden in der Auswerteeinheit mittels einer Schwellwerteinheit bewertet. Dadurch entstehen binäre Signalfolgen, anhand derer durch Vergleich mit abgespeicherten Kontrastmustern von Barcodes 2 die Erkennung des Barcodes 2 erfolgt.

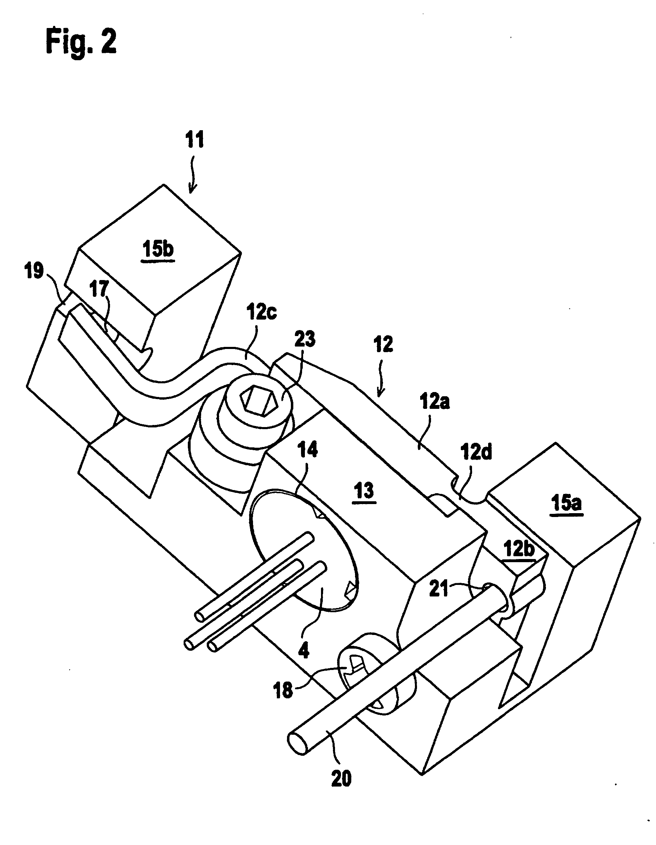

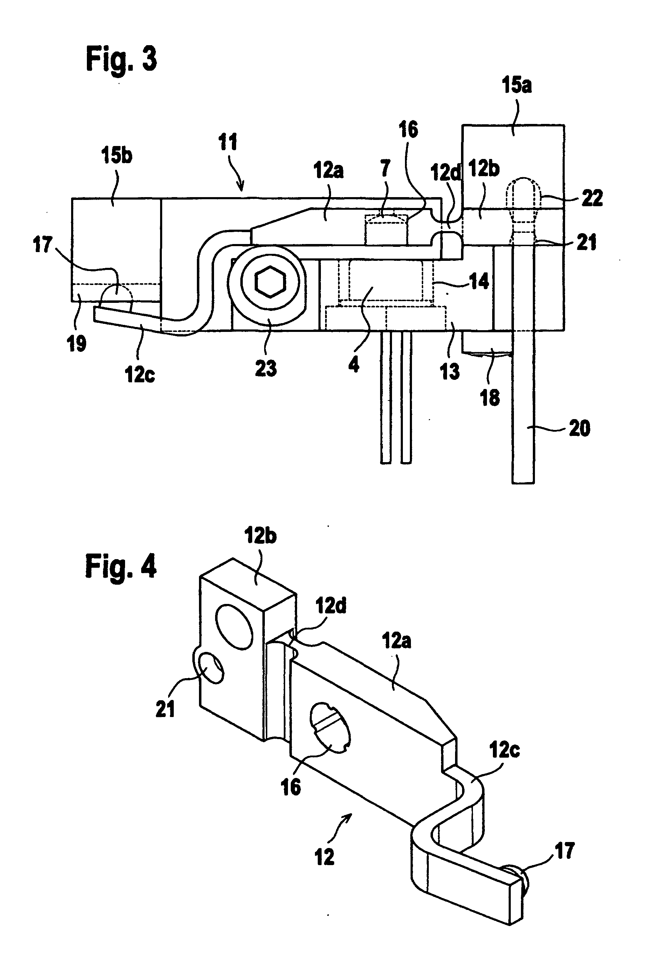

Zur Aufnahme der optischen Komponenten des optischen Sensors 1 gemäß Figur 1 ist ein Gehäuseeinsatz 11 vorgesehen, welcher in dem nicht dargestellten Gehäuse des optischen Sensors 1 integriert ist. Die Figuren 2 und 3 zeigen einen Ausschnitt dieses Gehäuseeinsatzes 11, an welchem eine Einstellvorrichtung zur Einstellung der Relativposition des Senders 4 und der Sendeoptik 7 vorgesehen ist.

Die Einstellvorrichtung weist einen Optikhalter 12 zur Aufnahme der Sendeoptik 7 auf. Der in Figur 4 separat dargestellte Optikhalter 12 ist am Gehäuseeinsatz 11 beweglich gelagert, wogegen der Sender 4 am Gehäuseeinsatz 11 ortsfest angebracht ist.

Der in den Figuren 2 und 3 dargestellte Ausschnitt des Gehäuseeinsatzes 11 weist einen Einsatz 13 mit einer Bohrung 14 auf, in welcher der Sender 4 gelagert ist. Weiterhin weist der Gehäuseeinsatz 11 ein erstes und zweites Halteteil 15a, b zur Lagerung des Optikhalters 12 auf. Die Halteteile 15a, b sind im Wesentlichen von quaderförmigen Elementen gebildet, die vom Boden des Gehäuseeinsatzes 11 senkrecht hervorstehen.

Der Optikhalter 12 besteht aus einem Kunststoffspritzteil, dessen Mittelstück ein Trägersegment 12a zur Aufnahme der Sendeoptik 7 bildet. Die Sendeoptik 7 ist dabei an einer Bohrung 16 gelagert, welche das Trägersegment 12a durchsetzt.

An die längsseitigen Enden des Trägersegments 12a schließen Aufnahmesegmente 12b, c an, welche ebenfalls Bestandteil des Optikhalters 12 sind. Das erste Aufnahmesegment 12b ist plattenförmig ausgebildet und an der dem Einsatz 13 zugeordneten ebenen Auflagefläche des ersten Halteteils 15a, welche in einer vertikalen Ebene verläuft, positionsverstellbar gelagert. Das erste Aufnahmesegment 12b ist über ein Biegeelement 12d mit dessen Trägersegment 12a verbunden. Das Biegeelement 12d ist von einer Schwächungsstruktur gebildet, in deren Bereich die Wanddicke des Optikhalters 12 erheblich reduziert ist. Das Biegeelement 12d bildet eine Biegefeder, mittels derer das Trägersegment 12a relativ zum ersten Aufnahmesegment 12b gebogen werden kann.

Zur Positionsverstellung kann das erste Aufnahmesegment 12b auf der Auflagefläche des ersten Halteteils 15a verschoben werden, wobei die Verschiebebewegung in der vertikalen Ebene der Auflagefläche und damit senkrecht zur in horizontaler Richtung verlaufenden optischen Achse des Senders 4 verläuft. Das zweite Aufnahmesegment 12c ist drehbar am zweiten Halteteil 15b gelagert. Dabei besteht das zweite Aufnahmesegment 12c im Wesentlichen aus zwei in rechten Winkeln verlaufenden Schenkeln, wobei am Vorderende des Schenkels am freien Ende des zweiten Aufnahmesegments 12c ein Drehkopf 17 zur Drehlagerung am zweiten Halteteil 15b vorgesehen ist. Die Schenkel des Aufnahmesegments 12c bilden dabei ein Federelement.

Der an den Halteteilen 15a, b liegende Optikhalter 12 schließt an die Frontseite des Einsatzes 13 an, so dass die Sendeoptik 7 im Einsatz 13 in vorgegebenen Abstand zu der im Optikhalter 12 gelagerten Sendeoptik 7 liegt. Das erste Aufnahmesegment 12b liegt in einer Aussparung zwischen der Frontseite des Einsatzes 13 und der Auflagefläche des Halteteils 15a. Zur Fixierung des Optikhalters 12 in einer bestimmten Einstellposition ist eine Fixierschraube 18 vorgesehen, welche den Einsatz 13 an seinem seitlichen Rand durchsetzt. Durch Betätigen der Fixierschraube 18 wird das erste Aufnahmesegment 12b in der Aussparung zwischen dem Einsatz 13 und dem ersten Halteteil 15a fixiert.

Die andere Seite des Optikhalters 12 ist dabei durch die Drehlagerung des zweiten Aufnahmesegments 12c am zweiten Halteteil 15b fixiert. Dabei ist der Drehkopf 17 am zweiten Aufnahmesegment 12c in einer Vertiefung 19 an der dem Einsatz 13 zugewandten, in einer vertikalen Ebene verlaufenden Aufnahmefläche des zweiten Halteteils 15b gelagert. Die Vertiefung 19 verläuft in horizontaler Richtung über die gesamte Breite des zweiten Halteteils 15b. Die Vertiefung 19 weist einen über ihre Länge konstanten halbkreisförmigen Querschnitt auf. Der Radius der Vertiefung 19 ist an den Radius des Drehkopfes 17 angepasst.

Die Längsachse des an den Halteteilen 15a, b angeordneten Optikhalters 12 verläuft ebenfalls in horizontaler Richtung, wobei die Längsachse des Optikhalters 12 senkrecht zur optischen Achse des Senders 4 verläuft.

Zur Einstellung der Relativposition des Senders 4 und der Sendeoptik 7 kann die Lage des Optikhalters 12 relativ zum Einsatz 13 in vorgegebener Weise geändert werden.

Zur Variation der Lage der Sendeoptik 7 in einer vertikalen, senkrecht zur optischen Achse des Senders 4 verlaufenden Ebene ist ein Betätigungselement in Form eines stangenförmigen Hebels 20 vorgesehen. Zur Aufnahme und Lagerung des Hebels 20 weist das erste Aufnahmesegment 12b eine Bohrung 21 auf. Die Bohrung 21 durchsetzt das erste Aufnahmesegment 12b in axialer Richtung. Dabei weist die Bohrung 21 im Zentrum des ersten Aumahmesegments 12b eine Querschnittsverengung auf. Von dieser Querschnittsverengung aus verbreitert sich der Durchmesser der Bohrung 21 von den Ausmündungen an der Front- und Rückseite des ersten Aufnahmesegments 12b hin kontinuierlich. Weiterhin ist zur Aufnahme des Hebels 20 im ersten Halteteil 15a eine Ausnehmung 22 vorgesehen, die an der Auflagefläche ausmündet. Die Ausnehmung 22 ist im Wesentlichen halbkugelförmig ausgebildet, wobei deren Durchmesser an der Auflagefläche etwas größer ist als der Durchmesser des Hebels 20. Zur Einstellung der Position der Sendeoptik 7 wird der Hebel 20 in die Bohrung 21 des ersten Aufnahmesegments 12b geführt, so dass das über das erste Aufnahmesegment 12b hervorstehende vordere Ende des Hebels 20 in die Ausnehmung 22 im ersten Halteteil 15a greift.

Durch Auslenken des Hebels 20 an seinem hinteren Ende wird dieser bezüglich seiner Lagerung in der Aufnahme geschwenkt. Dabei wird durch die Führung des Hebels 20 in der Bohrung 21 das erste Aufnahmesegment 12b in der Ebene der Auflagefläche ausgelenkt. Durch die konische Ausbildung der Bohrung 21 erfolgt eine kontinuierliche Umsetzung der Auslenkbewegung des Hebels 20 in eine Schwenkbewegung des Aufnahmesegments 12b und damit des gesamten Optikhalters 12. Bei dieser Schwenkbewegung wird der Optikhalter 12 bezüglich der durch den Drehkopf 17 vorgegebenen Schwenkachse geschwenkt. Zudem wird der Drehkopf 17 gegebenenfalls längs der Vertiefung 19 im zweiten Halteteil 15b verschoben. Sobald die gewünschte Einstellposition des Optikhalters 12 erreicht ist, wird dieser mittels der Fixierschraube 18 am Einsatz 13 fixiert.

Zur Einstellung der Position der Sendeoptik 7 in Richtung der optischen Achse des Senders 4 ist ein Excenter 23 vorgesehen. Der Excenter 23 ist als Excenterscheibe ausgebildet und seitlich zum Einsatz 13 mit in vertikaler Richtung verlaufender Drehachse gelagert. Die Mantelfläche der Excenterscheibe liegt an der Rückseite des Optikhalters 12 im Bereich des dem zweiten Aufnahmesegment 12c zugewandten Ende des Trägersegments 12a an. Die Excenterscheibe ist an ihrer Oberseite mittels eines Inbusschlüssels oder dergleichen betätigbar. Durch Betätigen der Excenterscheibe wird diese um ihre Drehachse gedreht, wodurch sich der Anpressdruck auf den Optikhalter 12 entsprechend der Form der Excenterscheibe ändert.

Durch die Änderung des Anpressdruckes erfolgt eine Biegung des Optikhalters 12 im Bereich des Biegeelements 12d, wodurch das Trägersegment 12a in horizontaler Richtung geschwenkt wird und die Sendeoptik 7 auf den Sender 4 zubewegt oder von diesem wegbewegt wird. Da durch den Excenter 23 das erste Aufuahmesegment 12b mit dem Drehkopf 17 in die Vertiefung 19 gedrückt wird, ist die jeweilige Einstellposition des Optikhalters 12 durch den Excenter 23 gesichert, wobei durch die Federwirkung der Schenkel das Aufnahmesegment 12c eine gegen den Excenter 23 drückende Anstoßfeder bildet.

### Bezugszeichenliste

- (1): Optischer Sensor
- (2): Barcode
- (3): Sendelichtstrahlen
- (4): Sender
- (5): Empfangslichtstrahlen
- (6): Empfänger
- (7): Sendeoptik
- (8): Polygonspiegelrad
- (9): Spiegelflächen
- (10): Überwachungsbereich
- (11): Gehäuseeinsatz
- (12): Optikhalter
- (12a): Trägersegment
- (12b): Aufnahmesegment
- (12c): Aufnahmesegment
- (12d): Biegeelement
- (13): Einsatz
- (14): Bohrung
- (15a, b): Halteteil
- (16): Bohrung
- (17): Drehkopf
- (18, 18'): Fixierschraube
- (19): Vertiefung
- (20, 20'): Hebel
- (21): Bohrung
- (22): Ausnehmung
- (23): Excenter

## Patentansprüche

1. Optischer Sensor mit einem Sendelichtstrahlen emittierenden Sender, einem Empfangslichtstrahlen empfangenden Empfänger und einer Auswerteeinheit zur Auswertung der am Ausgang des Empfängers anstehenden Empfangssignale, **dadurch gekennzeichnet, dass** dem Sender (4) eine Einstellvorrichtung zugeordnet ist, umfassend einen Optikhalter (12) mit einem Trägersegment (12a) zur Aufnahme einer dem Sender (4) nachgeordneten Sendeoptik (7) und zwei längsseitig an das Trägersegment (12a) anschließenden Aufnahmesegmenten (12b, c), wobei das erste Aufnahmesegment (12b) über ein Biegeelement (12d) an das Trägersegment (12a) gekoppelt ist und an einem ersten Halteteil (15a) gelagert ist und in einer senkrecht zur optischen Achse des Senders (4) orientierten Ebene mittels eines Betätigungselements verschiebbar ist, und wobei das zweite Aufnahmesegment (12c) an einem zweiten Halteteil (15b) drehbar und verschiebbar gelagert ist, und dass durch Biegen des Trägersegments (12a) bezüglich des ersten Aufnahmesegments (12b) die Position der Sendeoptik (7) in Richtung der optischen Achse des Senders (4) einstellbar ist.

2. Optischer Sensor nach Anspruch 1, **dadurch gekennzeichnet, dass** dieser als Barcodelesegerät ausgebildet ist, wobei die Sendelichtstrahlen (3) mittels einer Ablenkeinheit periodisch innerhalb eines Überwachungsbereichs (10) zur Erfassung von Barcodes (2) geführt sind.

3. Optischer Sensor nach Anspruch 2 **dadurch gekennzeichnet, dass** das erste Aufualunesegment (12b) plattenförmig ausgebildet ist und mit seiner Frontseite auf einer ebenen Auflagefläche des ersten Halteteils (15a) aufliegt.

4. Optischer Sensor nach Anspruch 3 **dadurch gekennzeichnet, dass** das erste Halteteil (15a) eine an der Auflagefläche ausmündende Ausnehmung (22) aufweist, dass das erste Aufnahmesegment (12b) von einer Bohrung (21) durchsetzt ist, und dass zur Einstellung der Lage der Sendeoptik (7) ein das Betätigungselement bildender Hebel (20) durch die Bohrung (21) des Aufnahmesegments (12b) geführt ist und in die Ausnehmung (22) des Halteteils (15a) greift.

5. Optischer Sensor nach Anspruch 4 **dadurch gekennzeichnet, dass** der Querschnitt der Bohrung (21) von der Mitte des Aufnahmesegments (12b) zu den Ausmündungen an dessen Front- und Rückseite hin kontinuierlich zunimmt.

6. Optischer Sensor nach einem der Ansprüche 4 oder 5, **dadurch gekennzeichnet, dass** die Ausnehmung (22) im ersten Halteteil (15a) im Wesentlichen halbkugelförmig ausgebildet ist, wobei in der Ausnehmung (22) das freie Ende des Hebels (20) schwenkbar gelagert ist.

7. Optischer Sensor nach einem der Ansprüche 1 - 6, **dadurch gekennzeichnet, dass** am freien Ende des zweiten Aufnahmesegments (12c) ein Drehkopf (17) vorgesehen ist, der am zweiten Halteteil (15b) drehbar und verschiebbar gelagert ist.

8. Optischer Sensor nach Anspruch 7, **dadurch gekennzeichnet, dass** das zweite Halteteil (15b) eine an einer Aufnahmefläche ausmündende Vertiefung (19) aufweist, in welcher der Drehkopf (17) gelagert ist.

9. Optischer Sensor nach Anspruch 8, **dadurch gekennzeichnet, dass** die Vertiefung (19) einen in Richtung ihrer Längsachse konstanten halbkreisförmigen Querschnitt aufweist, wobei deren Radius an den Radius des Drehkopfes (17) angepasst ist.

10. Optischer Sensor an Anspruch 9, **dadurch gekennzeichnet, dass** die Längsachse der Vertiefung (19) im Wesentlichen parallel zur Längsachse des Optikhalters (12) verläuft.

11. Optischer Sensor nach einem der Ansprüche 1 - 10, **dadurch gekennzeichnet, dass** der Optikhalter (12) von einem Kunststoffspritzteil gebildet ist, wobei das Biegeelement (12d) von einer lokalen Schwächungsstruktur des Kunststoffspritzteils gebildet ist.

12. Optischer Sensor nach einem der Ansprüche 1 - 11, **dadurch gekennzeichnet, dass** die Biegung des Trägersegments (12a) mittels eines Excenters (23) vorgebbar ist.

13. Optischer Sensor nach Anspruch 12, **dadurch gekennzeichnet, dass** der Excenter (23) von einer an ihrer Oberseite betätigbaren Excenterscheibe gebildet ist, deren Mantelfläche an der Rückseite des Optikhalters (12) aufliegt.

14. Optischer Sensor nach Anspruch 13, **dadurch gekennzeichnet, dass** durch den mittels des Excenters (23) auf den Optikhalter (12) ausgeübten Druck der Drehkopf (17) am zweiten Aufnahmesegment (12c) in die Vertiefung (19) des zweiten Halteteils (15b) gedrückt wird.

15. Optischer Sensor nach einem der Ansprüche 1 - 14, **dadurch gekennzeichnet, dass** der Sender (4) in einem Einsatz (13) gelagert ist, an dessen Frontseite der Optikhalter (12) anschließt.

16. Optischer Sensor nach Anspruch 15, **dadurch gekennzeichnet, dass** das erste Aufnahmesegment (12b) zwischen dem Einsatz (13) und dem ersten Halteteil (15a) angeordnet ist und dort in einer vorgegebenen Einstellposition mittels einer Fixierschraube (18) fixierbar ist.

## Claims

1. Optical sensor with a transmitter emitting a transmitted light beam, a receiver receiving a received light beam and an evaluating unit for evaluating the received signals present at the output of the receiver, **characterised in that** the transmitter (4) is associated with a setting device comprising an optical system mount (12) with a carrier segment (12a) for reception of a transmitting optical system (7), which is arranged downstream of the transmitter (4), and two receiving segments (12b, c) adjoining the carrier segment (12a) at the longitudinal side, wherein the first receiving segment (12b) is coupled with the carrier segment (12a) by way of a bending element (12d) and is mounted on a first mounting part (15a) and is displaceable by means of an actuating element in a plane oriented perpendicularly to the optical axis of the transmitter (4), and wherein the second receiving segment (12c) is mounted at a second mounting part (15b) to be rotatable and slidable, and that the position of the transmitting optical system (7) is adjustable in the direction of the optical axis of the transmitter (4) by bending of the carrier segment (12a) with respect to the first receiving segment (12b).

2. Optical sensor according to claim 1, **characterised in that** this is constructed as a bar code reading apparatus, wherein the transmitted light beams (3) are guided by means of a deflecting unit periodically within a monitoring region (10) for detection of bar codes (2).

3. Optical sensor according to claim 2, **characterised in that** the first receiving segment (12b) is constructed to be plate-shaped and rests by its front side on a flat support surface of the first mounting part (15a).

4. Optical sensor according to claim 3, **characterised in that** the first mounting part (15a) has a recess which opens at the support surface, that the first receiving segment (12b) is penetrated by a bore (21) and that for adjusting the position of the transmitting optical system (7) a lever (20) forming the actuating element is guided through the bore (21) of the receiving segment (12b) and engages in the recess (22) of the mounting part (15a).

5. Optical sensor according to claim 4, **characterised in that** the cross-section of the bore (21) continuously increases from the centre of the receiving segment (12b) towards the openings at the front side and rear side thereof.

6. Optical sensor according to one of claims 4 and 5, **characterised in that** the recess (22) is formed in the first mounting part (15a) to be substantially hemispherical, wherein the free end of the lever (20) is pivotably mounted in the recess (22).

7. Optical sensor according to one of claims 1 to 6, **characterised in that** a rotary head (17) rotatably and slidably mounted at the second mounting part (15b) is provided at the free end of the second receiving segment (12c).

8. Optical sensor according to claim 7, **characterised in that** the second mounting part (15b) has a depression (19) which opens at a receiving surface and in which the rotary head (17) is mounted.

9. Optical sensor according to claim 8, **characterised in that** the depression (19) has a semicircular cross-section constant in the direction of its longitudinal axis, wherein the radius thereof is adapted to the radius of the rotary head (17).

10. Optical sensor according to claim 9, **characterised in that** the longitudinal axis of the depression (19) extends substantially parallel to the longitudinal axis of the optical system mount (12).

11. Optical sensor according to one of claims 1 to 10, **characterised in that** the optical system mount (12) is formed from a plastics material injection-moulded part, wherein the bending element (12b) is formed by a local weakening structure of the plastics material injection-moulded part.

12. Optical sensor according to one of claims 1 to 11, **characterised in that** the bending of the carrier segment (12a) is presettable by means of an eccentric (23).

13. Optical sensor according to claim 12, **characterised in that** the eccentric (23) is formed by an eccentric disc which is actuable at its upper side and the circumferential surface of which rests on the rear side of the optical system mount (12).

14. Optical sensor according to claim 13, **characterised in that** the rotary head (17) at the second receiving segment (12c) is pressed into the depression (19) of the second mounting part (15b) by the pressure exerted on the optical system mount (12) by means of the eccentric (23).

15. Optical sensor according to one of claims 1 to 14, **characterised in that** the transmitter (4) is mounted in an insert (13) adjoined at the front side thereof by the optical system mount (12).

16. Optical sensor according to claim 15, **characterised in that** the first receiving segment (12b) is arranged between the insert (13) and the first mounting part (15a) and is fixable there in a predetermined adjusted position by means of a fixing screw (18).

## Revendications

1. Capteur optique comprenant un émetteur émettant des rayons lumineux d'émission, un récepteur recevant des rayons lumineux de réception et une unité d'évaluation pour évaluer les signaux de réception présents à la sortie du récepteur, **caractérisé par le fait qu'**à l'émetteur (4) est associé un dispositif de réglage comprenant une monture optique (12) avec un segment porteur (12a) prévu pour recevoir une optique d'émission (7) disposée après l'émetteur (4) et deux segments de réception (12b, c) contigus au segment porteur (12a) dans le sens de la longueur, le premier segment de réception (12b) étant couplé au segment porteur (12a) par un élément flexible (12d) et monté sur une première pièce de retenue (15a) et déplaçable au moyen d'un élément de commande dans un plan orienté perpendiculairement par rapport à l'axe optique de l'émetteur (4), et le deuxième segment de réception (12c) étant pivotant et déplaçable sur une deuxième pièce de retenue (15b), et que la position de l'optique d'émission (7) est réglable en direction de l'axe optique de l'émetteur (4) par flexion du segment porteur (12a) par rapport au premier segment de réception (12b).

2. Capteur optique selon la revendication 1, **caractérisé par le fait que** celui-ci est formé comme lecteur de codes barres, les rayons lumineux d'émission (3) étant guidés périodiquement à l'intérieur d'une zone de surveillance (10) au moyen d'une unité de déviation en vue de la saisie de codes barres (2).

3. Capteur optique selon la revendication 2, **caractérisé par le fait que** le premier segment de réception (12b) est en forme de plaque et repose par sa face avant sur une surface d'appui plane de la première pièce de retenue (15a).

4. Capteur optique selon la revendication 3, **caractérisé par le fait que** la pièce de retenue (15a) présente un évidement (22) débouchant sur la surface d'appui, que le premier segment de réception (12b) est traversé par un trou (21) et que pour le réglage de la position de l'optique d'émission (7), un levier (20) formant l'élément de commande est guidé à travers le trou (21) du segment de réception (12b) et engagé dans l'évidement (22) de la pièce de retenue (15a).

5. Capteur optique selon la revendication 4, **caractérisé par le fait que** la section du trou (21) augmente continûment du milieu du segment de réception (12b) aux débouchés sur ses faces avant et arrière.

6. Capteur optique selon l'une des revendications 4 ou 5, **caractérisé par le fait que** l'évidement (22) de la première pièce de retenue (15a) est essentiellement hémisphérique, l'extrémité libre du levier (20) étant orientable dans l'évidement (22).

7. Capteur optique selon l'une des revendications 1 à 6, **caractérisé par le fait qu'**il est prévu à l'extrémité libre du deuxième segment de réception (12c) une tête tournante (17) qui est pivotante et déplaçable sur la deuxième pièce de retenue (15b).

8. Capteur optique selon la revendication 7, **caractérisé par le fait que** la deuxième pièce de retenue (15b) présente un renfoncement (19) débouchant sur une surface d'appui dans lequel la tête tournante (17) est logée.

9. Capteur optique selon la revendication 8, **caractérisé par le fait que** le renfoncement (19) présente une section semi-circulaire constante en direction de son axe longitudinal, son rayon étant adapté au rayon de la tête tournante (17).

10. Capteur optique selon la revendication 9, **caractérisé par le fait que** l'axe longitudinal du renfoncement (19) est essentiellement parallèle à l'axe longitudinal de la monture optique (12).

11. Capteur optique selon l'une des revendications 1 à 10, **caractérisé par le fait que** la monture optique (12) est formée par une pièce en plastique moulée par injection, l'élément flexible (12d) étant formé par une structure d'affaiblissement locale de la pièce en plastique moulée par injection.

12. Capteur optique selon l'une des revendications 1 à 11, **caractérisé par le fait que** la flexion du segment porteur (12a) peut être fixée par avance au moyen d'un excentrique (23).

13. Capteur optique selon la revendication 12, **caractérisé par le fait que** l'excentrique (23) est formé par un disque excentrique manoeuvrable sur sa face supérieure, dont la surface latérale ou d'enveloppe repose sur la face arrière de la monture optique (12).

14. Capteur optique selon la revendication 13, **caractérisé par le fait que** la pression exercée au moyen de l'excentrique (23) sur la monture optique (12) pousse la tête tournante (17) sur le deuxième segment de réception (12c) dans le renfoncement (19) de la deuxième pièce de retenue (15b).

15. Capteur optique selon l'une des revendications 1 à 14, **caractérisé par le fait que** l'émetteur (4) est logé dans un insert (13) à la face avant duquel est contiguë la monture optique (12).

16. Capteur optique selon la revendication 15, **caractérisé par le fait que** le premier segment de réception (12b) est disposé entre l'insert (13) et la première pièce de retenue (15a) et peut être fixé là dans une position de réglage fixée par avance au moyen d'une vis de fixation (18).
